# EUROPÄISCHE PATENTSCHRIFT

(11) **EP 2 011 521 B1**
(45) Veröffentlichungstag und Bekanntmachung des Hinweises auf die Patenterteilung: **07.12.2011**
(21) Anmeldenummer: 08159462.4
(22) Anmeldetag: 01.07.2008
(51) Int. Cl.: A61L 9/03, A01M 1/20

(54) **Schwefelverdampfer**
Sulphur vaporiser
Evaporateur de souffre

(30) Priorität: 06.07.2007 DE 102007031572
(43) Veröffentlichungstag der Anmeldung: 07.01.2009
(73) Patentinhaber: Elstein-Werk M. Steinmetz Gmbh & Co.KG, 37154 Northeim (DE)
(72) Erfinder: Sewzyk, Peter Elstein-Werk M. Steinmetz GmbH & Co. KG, 33100 Paderborn (DE); Erdmann, Wolfgang, Dr. Elstein-Werk M. Steinmetz GmbH & Co. KG, 37191 Katlenburg-Lindau (DE)
(74) Vertreter: Rehberg Hüppe + Partner

(56) Entgegenhaltungen:
- JP-A- 2003 250 703
- US-A- 1 982 358
- US-A- 2 660 828
- US-A1- 2006 045 818

## Beschreibung

### TECHNISCHES GEBIET DER ERFINDUNG

Die Erfindung betrifft einen Schwefelverdampfer mit einer Wärmequelle in Form einer in keramisches Material eingebetteten elektrisch betriebenen Heizwendel und einem eine Wandung aufweisenden topfartigen Gefäß mit einem Aufnahmeraum für den zu verdampfenden Schwefel.

Ein solches Gerät dient allgemein zur Verdampfung von Pestiziden, auch von Mischungen solcher Pestizide und anderer Bekämpfungsmittel, wie sie bei der Bekämpfung von Pflanzenkrankheiten eingesetzt werden. Dabei geht es darum, das jeweilige Gegenmittel, sei es in flüssiger oder fester Form, in Dampfform zu überführen und den entstehenden Dampf in einem geschlossenen Gebäude, insbesondere einem Gewächshaus, zur Verteilung zu bringen. Ein Hauptanwendungsgebiet ist die Verdampfung von Schwefel, wie er insbesondere bei der Bekämpfung von Mehltau bei Rosen-, Paprika- und Tomatenkulturen eingesetzt wird.

### STAND DER TECHNIK

Ein Schwefelverdampfer der Nivola B.V. aus den Niederlanden ist unter der Bezeichnung "NIVOLA" bekannt. Er weist ein metallenes Gehäuse in Form eines Rohr- oder Hülsenabschnitts auf, ist also oben und unten offen gestaltet. Meist ist das Gehäuse mit einem Aufhängebügel versehen, um den Verdampfer an entsprechender Stelle im Gewächshaus aufzuhängen. Das Gehäuse trägt im unteren Bereich auf einem Querträger, der also den Innenraum des Gehäuses von unten nach oben offen lässt, eine Fassung, der im Einsatz über ein entsprechendes Kabel die elektrische Energie zugeführt wird. Die Fassung ist ortsfest im Gehäuse angeordnet. Der Schwefelverdampfer besitzt als Wärmequelle einen Infrarotstrahler, also ein Bauteil, welches im Wesentlichen aus keramischem Material besteht und eine etwa pilzförmige Gestaltung mit einer horizontal ausgerichteten Strahlungsfläche aufweist. In dem keramischen Material des Infrarotstrahlers ist eine Heizwendel eingebettet, die spiral- oder mäanderartig angeordnet ist. An der Stelle der Oberfläche des Infrarotstrahlers, unter der sich die Heizwendel befindet, ergibt sich eine örtliche Aufwölbung, so dass die spiralartige Lage der Heizwendel von außen gut erkennbar ist. Der Infrarotstrahler besitzt an seinem unteren Ende einen zu der Fassung passenden Schraubsockel, über den die elektrische Verbindung zu der Heizwendel sichergestellt ist. Im Innenraum des Gehäuses ist ein weiterer Rohrabschnitt vorgesehen, der in der Höhe verstellbar angeordnet ist und den Infrarotstrahler umgibt. Dieser Rohrabschnitt dient zur Aufnahme eines topfartigen Gefäßes, welches mit einem überstehenden Rand in den höhenverstellbaren Rohrabschnitt eingesetzt wird. Dieses topfartige Gefäß weist einen Boden und eine sich im Wesentlichen vertikal erstreckende Wandung für den zu verdampfenden Schwefel auf. Das topfartige Gefäß besteht aus blankem, relativ schwach wärmeabsorbierendem Aluminium. Mit Hilfe des höhenverstellbaren Rohrabschnitts ist es damit möglich, das topfartige Gefäß aus Aluminium mit verschiedenen Höhenabständen zu der Oberfläche des Infrarotstrahlers einzustellen und anzuordnen. Es ist auch möglich, dass das topfartige Gefäß direkt auf der Strahlungsfläche des Infrarotstrahlers aufsteht.

Der bekannte Schwefelverdampfer "NIVOLA" wird mit Infrarotstrahlen betrieben, die je nach der gewünschten Zufuhr der elektrischen Leistung auf eine Leistungsaufnahme von 80, 90 bzw. 100 Watt ausgelegt sind. Damit lassen sich Verdampfungsleistungen erzielen, die in der Größenordnung von 0,3 bis 0,42 g/h liegen. Die dazu erforderlichen Temperaturen der Wärmequelle liegen vergleichsweise hoch, insbesondere in einem Bereich zwischen 300 und 500 °C. Der Wärmeübergang zwischen dem Infrarotstrahler und dem topfartigen Gefäß aus Aluminium ist problematisch. Er hängt zum einen wesentlich davon ab, ob und welcher Abstand zwischen der Oberfläche des Infrarotstrahlers und dem Boden des topfartigen Gefäßes eingestellt wird. Aber auch dann, wenn das topfartige Gefäß direkt auf der Strahlungsfläche des Infrarotstrahlers aufgestellt wird, treten unterschiedliche Kontaktflächen für den Wärmeübergang auf. Im besten Fall ist der Boden des topfartigen Gefäßes eben ausgebildet, so dass bei Anordnung der Heizwendel in einer Ebene und entsprechender Ausbildung des Infrarotstrahlers auf seiner Strahlungsfläche nur eine spiralförmige linienartige Berührung zwischen dem keramischen Material des Infrarotstrahlers und dem Gefäß aus Aluminium eintritt. Ist der Boden des topfartigen Gefäßes aus Aluminium, sei es durch Wärmeeinwirkung oder mechanische Verformung, so verändert, dass er nicht mehr eben ist, tritt eine weitere Verschlechterung des Wärmeübergangs auf. Je nach dem Zustand des Schwefelverdampfers werden so ungewollt unterschiedliche Verdampfungsleistungen die Folge sein, die der Anwender dadurch auszugleichen sucht, dass er dem Infrarotstrahler eine möglichst hohe elektrische Energie zuführt. Hierdurch entstehen am Infrarotstrahler gefährliche Oberflächentemperaturen, die über den Bereich der Selbstentzündungstemperatur des Schwefels erheblich hinausgehen. Wenn flüssiger Schwefel mit solchen Oberflächenbereichen des Infrarotstrahlers in Kontakt kommt, wird die Selbstentzündungstemperatur des Schwefels überschritten, so dass auch hier eine erhebliche Gefahr von Gewächshausbränden eintritt. Begrenzt man die Leistungszufuhr zu dem Infrarotstrahler, sinkt die Verdampfungsleistung.

Es ist ein weiterer Schwefelverdampfer der HotBox International Ltd. ist bekannt, der ebenfalls ein rohrartiges metallenes Gehäuse aufweist, in welchem eine Wärmequelle in Form einer ebenen Heizplatte aus Halbleitermaterial mit einem positiven Temperaturkoeffizienten untergebracht ist. Diese besondere Ausbildung der Heizplatte hat den Vorteil, dass beim Auftreten steigender Temperaturen die Leistungsaufnahme sinkt, so dass eine solche Heizplatte an ihrer Oberfläche Temperaturen erreicht, die im Betrieb dauerhaft in der Größenordnung von 200 °C bis 220 °C liegen und diese Grenze nicht überschreiten. Auch hier gehört zu dieser Wärmequelle ein separates topfartiges Gefäß aus blankem Aluminium mit einem Aufnahmeraum für den zu verdampfenden Schwefel. Das topfartige Gefäß wird hier jedoch direkt auf die Heizplatte aufgestellt, ähnlich wie dies bei einem Kochtopf auf der Heizplatte eines Herdes der Fall ist. Dieser Verdampfer besitzt keinen höhenverstellbaren Rohrabschnitt. Eine Veränderung des Abstands zwischen dem Boden des Gefäßes und der Heizplatte ist nicht vorgesehen. Bei diesem Schwefelverdampfer wird zwar vorteilhaft das Auftreten der Selbstentzündungstemperatur des Schwefels vermieden, andererseits besitzen diese Schwefelverdampfer jedoch den Nachteil einer vergleichsweise geringen Verdampfungsleistung in der Größenordnung von etwa 0,13 g/h. Hierzu gehören Temperaturen in dem zu verdampfenden flüssigen Schwefel in der Größenordnung von etwa 130 °C bis 140 °C. Auch bei diesem Schwefelverdampfer treten die Nachteile auf, dass sich mechanische oder thermische Formänderungen des topfartigen Gefäßes zur Aufnahme des zu verdampfenden Schwefels in einer Änderung des Wärmeübergangs zwischen der Wärmequelle, dem Gefäß und dem zu verdampfenden Schwefel äußern, wodurch die Unsicherheit besteht, dass unreproduzierbar unterschiedliche Verdampfungsleistungen auftreten. Die Dimensionierung der Schwefelverdampfung ist auch bei diesem Gerät schlecht beherrschbar. Dies führt wiederum dazu, dass in der Anwendung oft mit einem Überschuss an Schwefelverdampfung gearbeitet wird, was wiederum den Nachteil hat, dass erhebliche Lüftungszeiten für das Gewächshaus erforderlich werden, bevor dieses wieder betreten und darin gearbeitet werden kann.

Ein weiterer Schwefelverdampfer ist aus der WO 2005/036959 A2 bekannt. Dieser Schwefelverdampfer weist als separate Einzelteile ein Gefäß mit Boden und Wandung aus einer Aluminiumlegierung auf, welches auf einer Heizplatte aus gut wärmeleitendem Material aufgestellt wird. Unter der Heizplatte befindet sich das Heizmittel bzw. die Quelle zur Erzeugung von Wärme. Die innere Oberfläche des Gefäßes ist durch die Anordnung von im Wesentlichen vertikal verlaufenden Rippen, Ringen u. dgl. vergrößert. Die sich zwischen den Rippen bzw. Ringen ergebenden Räume sind durch Nuten verbunden, so dass sich der beim Verdampfen zunächst flüssig werdende Schwefel entsprechend in den durch die Rippen volumenmäßig verkleinerten Aufnahmeraum verteilen kann. Die Wärmequelle ist als separate Heizplatte ausgebildet. Die Rippen, Ringe o. dgl. sind mit einer porösen Beschichtung versehen. Die Beschichtung weist eine Vielzahl von Löchern auf, wodurch die Schwefelverdampfung unter Einwirkung von Osmose begünstigt sein soll. Diese Entwicklungsrichtung eines Schwefelverdampfers ist auf die Vergrößerung der Oberfläche im Gefäß gerichtet, während die Anordnung und Ausbildung der Wärmequelle aus dem Stand der Technik unverändert übernommen wird. Zur weiteren Vergrößerung der Oberfläche können die Rippen oder Ringe mit halbkreisförmigen Vertiefungen versehen sein. Auf diese Weise wird die innere Oberfläche zur Übertragung der Wärme auf den Schwefel maximiert. In einer weiteren Ausführungsform wird eine Temperatursteuerung eingesetzt, wobei der Abstand zwischen der Heizplatte und dem Boden des Gefäßes variabel eingestellt werden kann. Mit der Vergrößerung des Abstands wird der Wärmeübergang und damit die Verdampfungsleistung schlechter. Dieser Nachteil kann durch eine verstärkte Beheizung ausgeglichen werden. Allerdings wächst damit auch die Gefahr von Gewächshausbränden. Weiter ist nachteilig, dass die Wärme von der Heizplatte an die entsprechenden Stellen des Gefäßes mit den Ringen und Rippen über weite und unterschiedlich lange Wege geleitet werden muss. Vermutlich werden sich hierdurch unterschiedliche Bedingungen und örtlich unterschiedliche Temperaturen einstellen, was nicht im Sinne einer leistungsstarken Schwefelverdampfung angesehen werden kann.

### AUFGABE DER ERFINDUNG

Der Erfindung liegt die Aufgabe zugrunde, einen Schwefelverdampfer der eingangs beschriebenen Art so weiterzubilden, dass hohe Verdampfungsleistungen in der Größenordnung von 0,4 g/h, wie bisher, und höher zu erreichen sind, ohne dass dabei die Gefahr der Selbstentzündung des Schwefels besteht.

### LÖSUNG

Die Aufgabe der Erfindung wird erfindungsgemäß mit den Merkmalen des unabhängigen Patentanspruchs 1 gelöst. Der neue Schwefelverdampfer stellt einen Sicherheitsverdampfer mit hoher Verdampfungsleistung dar.

### WEITERER STAND DER TECHNIK

Der aus der US 2,660,828 bekannte Verdampfer ist ein Langzeitverdampfer, der zum Verdampfen von Schwefel weder geeignet, noch dafür vorgesehen ist. Mit dem Verdampfer sollen vielmehr gegen Insekten wirksame Chemikalien mit möglichst geringer Verdampfungsleistung über einen mehrere Monate andauernden Zeitraum verdampft werden. Als Beispiel für solche Chemikalien wird Paradichlorbenzen mit einem Schmelzpunkt von etwa 55 °C genannt. Als Wärmequelle wird eine elektrisch betriebene Heizwendel vorgeschlagen, die in einem mit Luft gefüllten Zwischenraum eines zweischaligen Gefäßes angeordnet ist. Das zweischalige Gefäß weist einen Aufnahmeraum für die Chemikalie auf. Es bleibt offen, aus welchem Material die beiden Schalen des Gefäßes bestehen. Die beiden Schalen sind jedoch in ihrem Kantenbereich durch Rollen verbunden, sodass geschlossen werden kann, dass die Schalen aus Blech bestehen.

### BESCHREIBUNG DER ERFINDUNG

Die Erfindung fasst die Wärmequelle und das Gefäß mit dem Aufnahmeraum für den zu verdampfenden Schwefel zu einem einstückigen Körper zusammen, der im Wesentlichen aus keramischem Material besteht. Der neue Schwefelverdampfer setzt sich damit grundsätzlich vom bisherigen Stand der Technik ab, in dem die Zweiteiligkeit von Wärmequelle und Gefäß durchgehend auftritt, was von der Vorstellung eines Kochtopfs auf einer Herdplatte bei normaler Küchenanwendung beeinflusst sein mag. Diese gedankliche Schwelle für den Fachmann wird mit dem neuen Schwefelverdampfer überschritten.

Der zu verdampfende Schwefel besitzt für ihn typische Eigenschaften. Er wird meist in fester Form, beispielsweise in Tablettenform, eingesetzt. Bei etwa 119 °C geht der Schwefel von der festen Form in den flüssigen Zustand über. Es versteht sich, dass bis zum Eintritt von Verdampfung, d. h. vom Übergang vom flüssigen in den dampfförmigen Zustand, eine weitere Temperatursteigerung erforderlich ist. Innerhalb dieser Temperatursteigerung ergeben sich Viskositäts- und/oder Farbänderungen am Schwefel. In einem Temperaturbereich, der etwa zwischen 230 °C und 260 °C liegt, erreicht der Schwefel jedoch eine Selbstentzündungstemperatur, bei der die Gefahr von Gewächshausbränden erheblich gesteigert ist. Einerseits gilt es, diesen Temperaturbereich zu vermeiden, andererseits wird eine hohe Verdampfungsleistung gewünscht, die nur dann möglich ist, wenn die Temperatur des flüssigen Schwefels entsprechend gesteigert wird.

Der neue Schwefelverdampfer weist in der Regel natürlich auch ein metallenes Gehäuse in Form eines Rohrabschnitts auf, das das einstückige Innenteil aus Wärmequelle und Aufnahmeraum umgibt. Die Anordnung ist wie im Stand der Technik mit einem ringförmigen Durchtrittsraum von unten nach oben verbunden, durch die ein Kamineffekt erzielt wird, d. h. es wird Luft aus dem Gewächshaus unten angesaugt, die den verdampfenden Schwefel aufnimmt und im Gewächshaus verteilt. Durch die Einstückigkeit der Gestaltung der Wärmequelle und des Aufnahmeraums wird die Wärmeübertragung und der Wärmeübergang reproduzierbar festgelegt und vergleichmäßigt, so dass beim Verdampfen von Schwefel zuverlässig reproduzierbare Verhältnisse entstehen und damit die Dosierung des Schwefels relativ zu den Pflanzen im Gewächshaus beherrschbar wird.

Mit dem neuen Schwefelverdampfer wird ein Sicherheitsverdampfer geschaffen, bei dem durch entsprechende Abstimmung der elektrischen Leistungsaufnahme der Heizwendel die Oberflächentemperatur des Aufnahmeraums des Gefäßes so begrenzt ist, dass die Selbstentzündungstemperatur des Schwefels nicht erreicht wird. Damit ist die Gefahr des Auftretens von Gewächshausbränden, verursacht durch den Schwefelverdampfer, weitgehend beseitigt.

Erstaunlicherweise gestattet es der neue Schwefelverdampfer, hohe Verdampfungsleistungen in der Größenordnung von 0,4 g/h bis etwa hin zu etwa 1 g/h zu verwirklichen. All dies ist möglich bei im Vergleich zum Stand der Technik verringerter Leistungseinspeisung, die in der Größenordnung von 50 Watt liegen kann. Damit treten vorteilhaft geringere Kosten beim Betrieb des Schwefelverdampfers auf.

Ein weiterer Vorteil des neuen Schwefelverdampfers ist darin zu sehen, dass die Heizfläche im Vergleich zu den Schwefelverdampfern des Stands der Technik vergrößert wird. Die Heizfläche wird nicht mehr nur in einer Fläche angeordnet, die sich in etwa parallel zum Boden des topfartigen Gefäßes erstreckt, sondern die Heizfläche liegt in dem einstückigen Bauteil, welches einerseits die elektrisch betriebene Heizwendel aufnimmt und andererseits den Aufnahmeraum für den zu verdampfenden Schwefel bildet. Im Stand der Technik wird die Wandung des topfartigen Gefäßes nicht zur Einbindung und zur Übertragung nennenswerter Wärme herangezogen, während umgekehrt bei dem neuen Schwefelverdampfer die wesentliche Beheizung des Aufnahmeraums über die sich im Wesentlichen vertikal zylindrisch oder kegelig erstreckende Wandung des topfartigen Gefäßes erfolgt. Hier steht vorteilhaft eine vergleichsweise größere Fläche, als es bei der Kreisfläche des Stands der Technik der Fall ist, zur Verfügung. Dabei wird nicht ausgeschlossen, dass der Aufnahmeraum auch einen Boden aufweisen kann, in dessen Bereich ein Teil der Heizwendel angeordnet bzw. untergebracht ist. Die insgesamt erfolgende Vergrößerung der Heizfläche durch Nutzung der Wandung des Gefäßes wirkt sich vorteilhaft in einer Verkleinerung der zuzuführenden Heizleistung bei gleicher oder sogar höherer Verdampfungsleistung im Vergleich zum Stand der Technik aus.

Der neue Schwefelverdampfer lässt es ohne weiteres zu, in seiner Formgebung und seinen Dimensionen so ausgebildet zu werden, dass eine Austauschbarkeit und eine Nachrüstbarkeit von vorhandenen Schwefelverdampfern gegeben ist. Hierzu ist es beispielsweise sinnvoll, einen Schraubanschluss des Schwefelverdampfers zu einer Schraubfassung zu verwirklichen, wie sie als Befestigungsmittel auch bei normalen Glühlampen Verwendung findet. Da der Aufnahmeraum für den Schwefel nunmehr aus keramischem Material besteht, sind Formänderungen, die den Wärmeübergang nachteilig beeinflussen können, ausgeschlossen. Die Heizwendel ist maximal nahe an der Innenwandung des Aufnahmeraums angeordnet. Dies geschieht jedoch vorzugsweise so, dass keine Aufwölbungen an keramischer Masse verwirklicht werden, so dass optisch nicht erkennbar ist, wo die Heizwendel angeordnet ist.

Der neue Schwefelverdampfer ist der wesentliche Bestandteil eines solchen Verdampfungsgeräts, welches zusätzlich auch noch ein Gehäuse aufweisen kann, wie es im Stand der Technik verwirklicht wird. Damit tritt auch bei dem neuen Schwefelverdampfer vorteilhaft die erwünschte Kaminwirkung für einen Antrieb der den dampfförmigen Schwefel verteilenden Luftströmung ein.

Der zu verdampfende Schwefel kann in Tablettenform oder auch in Pulverform in den Aufnahmeraum eingebracht werden. Da der Aufnahmeraum dauerhaft in dem Gefäß angeordnet ist, entfällt die Möglichkeit, den Aufnahmeraum von dem Gefäß zu lösen. Damit werden weitere Fehlerquellen beseitigt. Durch den Entfall der in der Höhe verstellbaren Hülse aus dem Stand der Technik wird das Gerät insgesamt preiswerter herstellbar.

Die wesentlichen Teile des Sicherheitsverdampfers bestehen damit aus keramischem Material. Die Heizwendel wird zumindest teilweise in die Wandung des Gefäßes verbracht. Dies bedeutet, dass bei einem Gefäß, welches keinen ausgeprägten Boden aufweist, die Heizwendel jedenfalls in der Wandung des Gefäßes angeordnet ist. Dies schließt jedoch nicht aus, dass bei Ausbildung eines ausgeprägten Bodens am Gefäß auch der Bodenbereich für die Unterbringung eines Teils der Heizwendel herangezogen wird. Die Unterbringung der Heizwendel in der Wandung des Gefäßes kann über die Höhe unterschiedlich ausgebildet sein, um eine Abstimmung auf den sich im Laufe der Verdampfung verringerten Füllstand des flüssigen Schwefels im Aufnahmeraum zu erzielen.

Der neue Schwefelverdampfer weist an seinem in Gebrauchsstellung oberen Ende den nach oben offenen Aufnahmeraum für den zu verdampfenden Schwefel und an seinem unteren Ende ein Befestigungsmittel in Form eines Schraubsockels, eines Klemmsockels oder dergleichen auf, der mit einem entsprechenden Gegenteil des Befestigungsmittels, also beispielsweise einer Schraubfassung, zusammenarbeitet.

Der neue Schwefelverdampfer kann als längliches sich in der Gebrauchsstellung vertikal erstreckendes Bauteil ausgebildet sein, wobei es vorteilhaft ist, wenn das Gefäß zwischen Aufnahmeraum und Befestigungsmittel einen Hohlraum aufweist. Dieser Hohlraum dient u. a. dazu, niedrige Temperaturen im Bereich des Befestigungsmittels auftreten zu lassen, die weit unterhalb der Selbstentzündungstemperatur des Schwefels liegen. Damit ist eine Brandgefahr auch an dieser Stelle ausgeschlossen, wenn flüssiger Schwefel mit dem Befestigungsmittel ungewollt in Kontakt kommt. Der der Isolierung dienende Hohlraum kann zusätzlich ganz oder teilweise mit einem isolierenden Material gefüllt sein, wodurch die thermische Isolierung weiter verbessert wird.

Hinsichtlich der elektrischen Gestaltung des Schwefelverdampfers sollte die Wärmequelle eine Flächenleistungsdichte im Bereich von etwa 0,7 bis 1,1 Watt/cm² aufweisen. Flächenleistungsdichten in der Größenordnung von 1 Watt/cm² haben sich in besonderer Weise bewährt. Dies reicht aus, um hohe Verdampfungsleistungen zu erreichen, wie sie bisher nicht verwirklichbar waren.

Das Gefäß aus keramischem Material kann an seinem in Gebrauchsstellung unteren Ende einen axial überstehenden Tropfrand aufweisen. Dieser Tropfrand erstreckt sich in axialer Richtung über den nach oben überstehenden Rand der Schraubfassung hinaus, so dass auch bei Überfüllung des Aufnahmeraums mit Schwefel und/oder bei ungewollter Schräganordnung des Gehäuses oder beim Anstoßen und die dadurch verursachte Pendelbewegung des Gehäuses ein etwa über den Rand des Aufnahmeraums übertretender Schwefel in flüssiger Form nicht in den Schraubsockel eindringen kann. Dies stellt eine zusätzliche Vorsichtsmaßnahme dar, die Gefahr von Bränden zu reduzieren bzw. auszuschließen.

Das Gefäß kann in Richtung auf sein in Gebrauchsstellung unteres Ende eine sich kegelig verjüngende Form aufweisen, so dass damit der Aufnahmeraum am oberen Ende entsprechend groß gestaltet werden kann. Es ergibt sich zwischen der Außenwandung des kegeligen Gefäßes und der Innenwandung des Gehäuses des Verdampfers ein sich kontinuierlich ändernder Querschnitt, der die Kaminwirkung unterstützt. Er trägt auch zu einer Verwirbelung der bewegten Luft bei, so dass der verdampfende Schwefel sicher mitgenommen und verteilt wird. Dies schließt freilich nicht aus, dass das Gefäß auch in zylindrischer, kelchförmiger oder pilzförmiger Gestalt realisierbar ist.

Das Gefäß sollte insbesondere im Bereich des Aufnahmeraums eine Glasur aufweisen, um die Oberfläche des Körpers aus keramischem Material dicht auszubilden und das Eindringen von Schwefel in das keramische Material auszuschließen. Dies schließt nicht aus, dass die gesamte Oberfläche des Gefäßes, also auch auf der Außenseite, von einer Glasur geschützt ist.

Der Aufnahmeraum des Gefäßes, sofern dieses einen ausgeprägten Boden aufweist, sollte auch im Bereich dieses Bodens eine ebene Oberfläche besitzen. Diese Gestaltung steht im Gegensatz zu der Ausbildung der oberen Oberfläche eines Infrarotstrahlers im Stand der Technik, auf den ein topfartiges Gefäß aufgestellt wird. Die Heizwendel ist tiefer in dem keramischen Material des Gefäßes eingebettet, so dass ihre Lage von außen optisch nicht erkennbar ist.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Längsschnitt durch eine erste Ausführungsform der neuen Vorrichtung mit einem Gehäuse und einer ersten Ausführungsform des neuen Schwefelverdampfers.
- **Fig. 2**: zeigt einen Längsschnitt durch eine zweite Ausführungsform des neuen Schwefelverdampfers.
- **Fig. 3**: zeigt den Schwefelverdampfer gemäß Fig. 2 um 90° gedreht.
- **Fig. 4**: zeigt einen Längsschnitt durch eine dritte Ausführungsform des neuen Schwefelverdampfers.
- **Fig. 5**: zeigt einen Längsschnitt durch eine vierte Ausführungsform des neuen Schwefelverdampfers.

### FIGURENBESCHREIBUNG

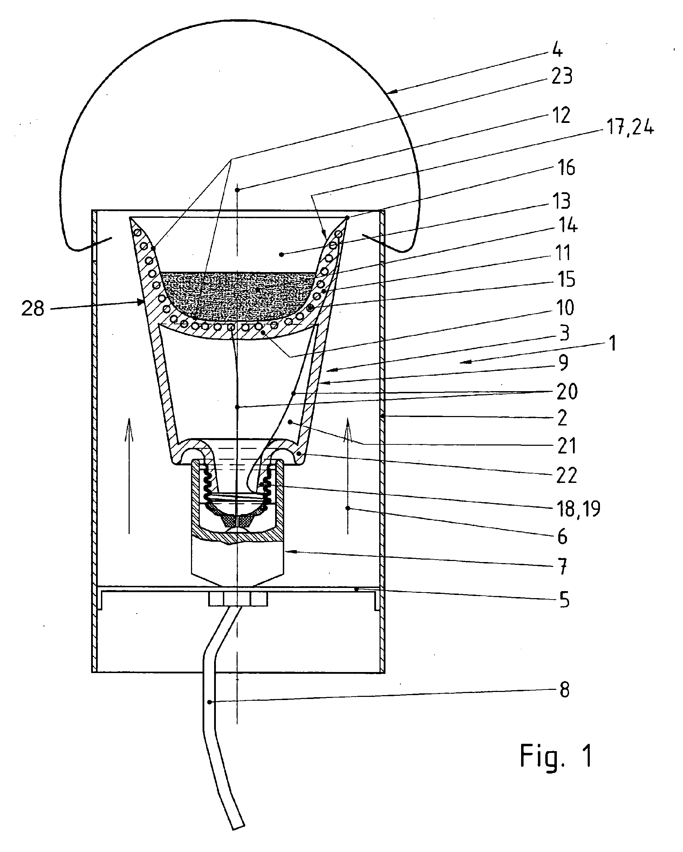

**Fig. 1** zeigt die vollständige Vorrichtung 1 aus einem Gehäuse 2, in dem der eigentliche Schwefelverdampfer 3 untergebracht ist. Das Gehäuse 2 wird von einem im Querschnitt kreisringförmigen metallenen Rohrabschnitt gebildet, der oben und unten offen ist. Ein im oberen Bereich an dem Gehäuse 2 angreifender Aufhängebügel 4 dient der Platzierung der Vorrichtung 1 im Gewächshaus, meist in aufgehängtem Zustand. Mit dem Gehäuse 2 ist ein stern- oder brückenartig ausgebildeter Querträger 5 fest verbunden, der den inneren Querschnitt zwischen dem Schwefelverdampfer 3 und der Innenwandung des Gehäuses 2 nur teilweise versperrt, damit eine kaminartige Luftströmung gemäß Pfeil 6 im Betrieb der Vorrichtung 1 nicht behindert, sondern ermöglicht wird. Auf dem Querträger 5 ist ortsfest eine Schraubfassung 7 angeordnet. Als Stromzufuhr zu der Schraubfassung 7 dient ein übliches elektrisches Kabel 8.

Sowohl die gesamte Vorrichtung 1, also mit Schwefelverdampfer 3 und Gehäuse 2 bilden eine verkaufsfähige Einheit. Auch der Schwefelverdampfer 3 bildet eine solche verkaufsfähige Einheit.

Der Schwefelverdampfer 3 besteht im Wesentlichen aus einem topfartigen Gefäß 9 aus keramischem Material. Im oberen Bereich weist das Gefäß 9 einen Boden 10 und eine Wandung 11 auf. Der Boden 10 ist vergleichsweise horizontal angeordnet und ausgerichtet, kann aber auch, wie dargestellt, leicht vertieft gestaltet sein. Die Wandung 11 erstreckt sich im Wesentlichen in vertikaler Richtung, also etwa zylindrisch oder kegelig zu einer Mittelachse 12. Boden 10 und Wandung 11 bilden und begrenzen einen Aufnahmeraum 13 für den zu verdampfenden Schwefel. In dem keramischen Material des Bodens 10 und der Wandung 11 ist eine elektrische Heizwendel 15 eingebettet. Es versteht sich, dass der Aufnahmeraum 13 nach oben offen gestaltet ist, damit bei entsprechender Erwärmung des Schwefels 14 dieser dampfförmig nach oben austreten und von der Luftströmung gemäß Pfeil 6 mit entsprechender Kaminwirkung im Ringquerschnitt zwischen Gehäuse 2 und der äußeren Begrenzung des Gefäßes 9 mitgenommen werden kann. Die Wandung 11 besitzt an ihrem oberen Ende einen schmal gestalteten Rand 16, um das Einbringen des Schwefels in den Innenraum 13 beim Befüllen des Schwefelverdampfers 3 zu begünstigen und eine versehentliche Ablagerung von Schwefel im Bereich des Rands 16 zu vermeiden. Andererseits begünstigt eine solche Gestaltung auch den Übertritt von Schwefeldampf in die aufsteigende Luftströmung. Die Heizwendel 15 stellt die Wärmequelle 28 des Schwefelverdampfers 3 dar. Die Heizwendel 15 ist so in das keramische Material des Bodens 10 und der Wandung 11 eingebettet, dass sich eine glatte Innenwandung 17 ergibt, also bei Einsicht in den Aufnahmeraum 13 nicht erkennbar ist, wo sich örtlich die Heizwendel 15 befindet.

Am unteren Ende des Gefäßes 9 ist das keramische Material des Gefäßes 9 dauerhaft mit einem Befestigungsmittel 18, hier in Form eines Schraubsockels 19 bekannter Gestaltung ausgestattet. Der Schraubsockel 19 ist komplementär zu der Schraubfassung 7 ausgebildet und erlaubt so das Einsetzen des Gefäßes 9 bzw. des Schwefelverdampfers 3 in die Schraubfassung 7. Verbindungsleitungen 20 führen von dem Schraubsockel 19 zu der Heizwendel 15. Sie dienen der Zufuhr elektrischer Energie über das Kabel 8 zu der Heizwendel 15.

Das Gefäß 9 aus keramischem Material weist in einer bevorzugten Ausführungsform die in Fig. 1 dargestellte Formgebung auf, die sich im Wesentlichen in einer kegelstumpfartigen Form, sich von oben nach unten verjüngend, gestaltet ist. Dabei schließt das Gefäß 9 zwischen dem Boden 10 bzw. dem Aufnahmeraum 13 und dem Befestigungsmittel 18 einen Hohlraum 21 ein, der der Isolierung dient. Einerseits soll im Bereich des Bodens 10 und der Wandung 11 eine hinreichend hohe Temperatur in dem zu verdampfenden Schwefel 14 entstehen, die eine intensive Erwärmung des Schwefels 14 zur Folge hat. Andererseits soll das Befestigungsmittel 18 auch im vollen Betrieb bei sehr viel niedrigerer Temperatur verbleiben, damit versehentlich in den Schraubsockel 7 gelangender flüssiger Schwefel nicht auf Selbstentzündungstemperatur gelangen kann, so dass damit die Gefahr von Bränden an dieser Stelle nicht mehr auftritt. Als weitere Vorsichtsmaßnahme besitzt das Gefäß 9 in seinem unteren Endbereich einen Tropfrand 22, der sich axial über das obere Ende des Schraubsockels 7 hinauserstreckt und es einem versehentlich am Außenumfang des Gefäßes 9 herablaufenden flüssigen Schwefel ermöglicht, beispielsweise bei schräger Aufhängung der Vorrichtung 1, nach unten abzutropfen, ohne die Schraubfassung 7 zu erreichen. Der Hohlraum 21 ist hier mit Luft gefüllt und besitzt Verbindung zur Umgebungsluft.

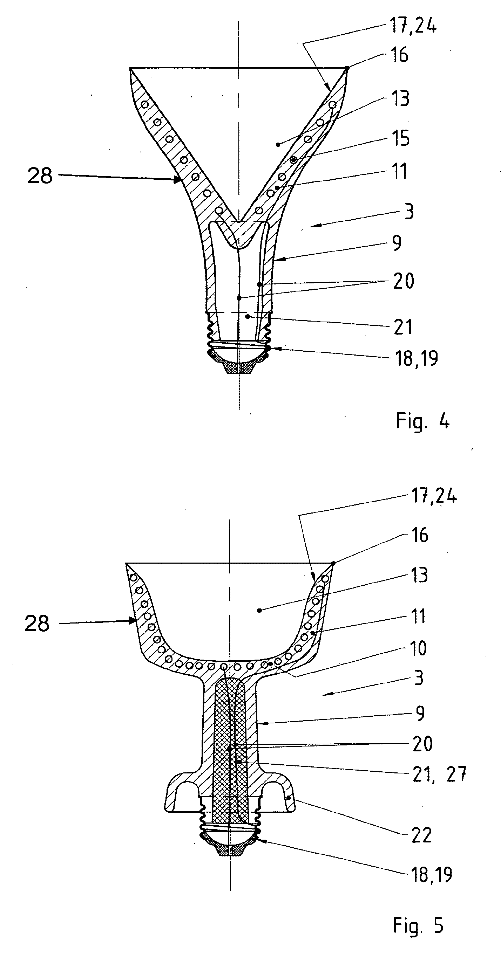

Der Aufnahmeraum 13 für den zu verdampfenden Schwefel 14 wird hier von dem Boden 10 und der Wandung 11 begrenzt bzw. gebildet. Es ist erkennbar, dass die Heizwendel 15 tief in das keramische Material eingebettet ist, so dass eine insgesamt glatte durchgehende Oberfläche 23 entsteht. Die Oberfläche 23 des Gefäßes 9, die den Aufnahmeraum 13 umschließt, ist mit einer Glasur 24 ausgestattet, die verhindert, dass Schwefel in das keramische Material des Gefäßes 9 einwandert. Auch die äußere Oberfläche des Gefäßes 9 kann eine solche Glasur 24 durchgehend aufweisen. Die Anordnung der Heizwendel 15 lässt erkennen, dass die sich im Wesentlichen vertikal erstreckende Wandung 11 eine vergleichsweise größere Fläche für die Wärmeentwicklung und Wärmeübertragung an den zu verdampfenden Schwefel 14 bereitstellt als der Boden 10. Die Wandung 11 bildet eine etwa zylindrische oder kegelstumpfförmige Fläche, während der Boden 10 lediglich eine Kreisringfläche bereitstellt. Je nach der gestaltmäßigen Ausbildung des Aufnahmeraums 13 kann der Boden 10 auch einen relativ kleinen Flächenanteil besitzen oder ganz entfallen (Fig. 4), so dass die wesentliche Wärmeentwicklung in der Wandung 11 stattfindet.

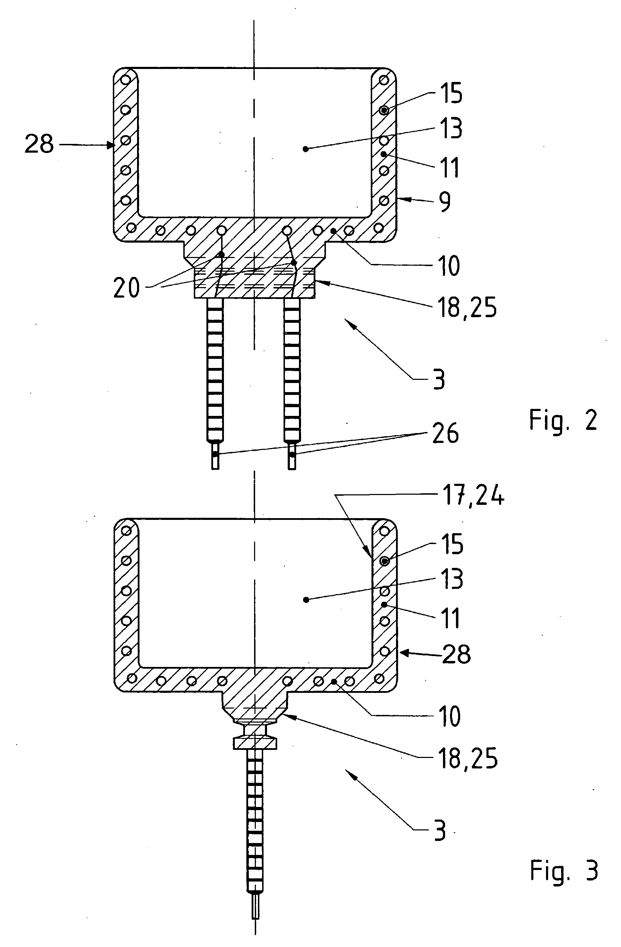

Die **Fig. 2 und 3** verdeutlichen eine zweite Ausführungsform des Schwefelverdampfers 3. Das Gefäß 9 ist hier topfartig ausgebildet und setzt sich aus einem sich im Wesentlichen horizontal erstreckenden Boden 10 und einer zylindrischen Wandung 11 zusammen. Die Heizwendel 15 ist hier im Boden 10 und in der Wandung 11 verteilt angeordnet. Auf diese Weise wird der Aufnahmeraum 13 für den hier nicht dargestellten Schwefel 14 gebildet. Das Gefäß 9 besitzt hier eine im Vergleich zu der Ausführungsform gemäß Fig. 1 verringerte Höhe. Das Befestigungsmittel 18 ist hier in Form eines Klemmsockels 25 verwirklicht und befindet sich unmittelbar unter dem Boden 10, also ohne Zwischenschaltung eines Hohlraums 21. Die Ausbildung solcher Klemmsockel 25 ist bei Infrarotstrahlern bekannt. Statt eines elektrischen Kabels werden hier zwei isolierte Leitungen 26 eingesetzt, die der Zufuhr der elektrischen Energie über die Verbindungsleitungen 20 zu der Heizwendel 15 dienen. Der Vergleich der Fig. 2 und 3 lässt die Ausbildung des Klemmsockels 25 mit seiner länglichen Gestalt erkennen.

Bei der Ausführungsform gemäß **Fig. 4** besitzt das Gefäß 9 eine schlanke, tulpenähnlich gestaltete äußere Oberfläche. Die Besonderheit besteht darin, dass der Aufnahmeraum 13 praktisch nur von der Wandung 11 umschlossen wird und ein ausgeprägter Boden 10 fehlt. Diese Gestaltung nutzt in optimaler Weise die relativ große Fläche der Wandung 11 für die Unterbringung der Heizwendel 15. Es wird ein im Querschnitt dreieckiger Aufnahmeraum 13 geschaffen.

Die Ausführungsform gemäß **Fig. 5** zeigt eine mehr kelchartige Gestaltung des Gefäßes 9 des Schwefelverdampfers 3. Der Hohlraum 21 ist hier mit Isoliermaterial 27 gefüllt. Der Tropfrand 22 ist hier besonders ausgeprägt gestaltet und erstreckt sich in axialer Richtung relativ weit über den Schraubsockel 19.

### BEZUGSZEICHENLISTE

- 1: Vorrichtung
- 2: Gehäuse
- 3: Schwefelverdampfer
- 4: Aufhängebügel
- 5: Querträger
- 6: Pfeil
- 7: Schraubfassung
- 8: Kabel
- 9: Gefäß
- 10: Boden
- 11: Wandung
- 12: Mittelachse
- 13: Aufnahmeraum
- 14: Schwefel
- 15: Heizwendel
- 16: Rand
- 17: Innenwandung
- 18: Befestigungsmittel
- 19: Schraubsockel
- 20: Verbindungsleitungen
- 21: Hohlraum
- 22: Tropfrand
- 23: Oberfläche
- 24: Glasur
- 25: Klemmsockel
- 26: Leitung
- 27: Isoliermaterial
- 28: Wärmequelle

## Patentansprüche

1. Schwefelverdampfer (3) mit einer Wärmequelle (28) in Form einer in keramisches Material eingebetteten elektrisch betriebenen Heizwendel (15) und einem eine Wandung (11) aufweisenden topfartigen Gefäß (9) mit einem Aufnahmeraum (13) für den zu verdampfenden Schwefel (14), wobei das Gefäß (9) im Wesentlichen aus keramischem Material besteht, wobei die Wärmequelle (28) in Form der Heizwendel (15) und das Gefäß (9) mit dem Aufnahmeraum (13) für den zu verdampfenden Schwefel (14) zu einem einstückigen Körper zusammengefasst sind, und wobei die Heizwendel (15) zumindest teilweise in der Wandung (11) des Gefäßes (9) angeordnet ist.

2. Schwefelverdampfer nach Anspruch 1, **dadurch gekennzeichnet, dass** das Gefäß (9) aus keramischem Material einen Boden (10) aufweist, in dem ein Teil der Heizwendel (15) angeordnet ist.

3. Schwefelverdampfer nach Anspruch 1 oder 2, **dadurch gekennzeichnet, dass** das Gefäß (9) an seinem einen Ende den nach oben offenen Aufnahmeraum (13) für den zu verdampfenden Schwefel (14) und an seinem anderen Ende ein Befestigungsmittel (18) in Form eines Schraubsockels (19), eines Klemmsockels (25) oder dergleichen aufweist.

4. Schwefelverdampfer nach Anspruch 3, **dadurch gekennzeichnet, dass** das Gefäß (9) zwischen Aufnahmeraum (13) und Befestigungsmittel (18) einen Hohlraum (21) aufweist.

5. Schwefelverdampfer nach Anspruch 4, **dadurch gekennzeichnet, dass** der Hohlraum (21) ganz oder teilweise mit einem Isoliermaterial (27) gefüllt ist.

6. Schwefelverdampfer nach einem oder mehreren der Ansprüche 1 bis 5, **dadurch gekennzeichnet, dass** die Wärmequelle (28) eine Flächenleistungsdichte im Bereich von etwa 0,7 bis 1,1 Watt/cm², insbesondere 1 Watt/cm², aufweist.

7. Schwefelverdampfer nach einem oder mehreren der Ansprüche 1 bis 6, **dadurch gekennzeichnet, dass** das Gefäß (9) an seinem in Gebrauchsstellung unteren Ende einen axial überstehenden Tropfrand (22) aufweist.

8. Schwefelverdampfer nach einem oder mehreren der Ansprüche 1 bis 7, **dadurch gekennzeichnet, dass** das Gefäß (9) in Richtung auf sein in Gebrauchsstellung unteres Ende eine sich kegelig verjüngende Form aufweist.

9. Schwefelverdampfer nach einem oder mehreren der Ansprüche 1 bis 8, **dadurch gekennzeichnet, dass** das Gefäß (9) insbesondere im Bereich des Aufnahmeraums (13) eine Glasur (24) aufweist.

10. Schwefelverdampfer nach einem oder mehreren der Ansprüche 1 bis 9, **dadurch gekennzeichnet, dass** der Aufnahmeraum (13) des Gefäßes (9) im Bereich des Bodens (10) eine ebene Oberfläche (23) aufweist.

## Claims

1. A sulphur evaporator (3) including a heat source (28) being designed as an electrically operated heating coil (15), the heating coil (15) being embedded in a pot-like container (9), the container (9) including a wall (11) and a holding space (13) for the sulphur (14) to be evaporated, wherein the container (9) is substantially made of ceramic material, wherein the heat source (28) being designed as the heating coil (15) and the container (9) with the holding space (13) for the sulphur (14) to be evaporated are combined to form one common structural unit, and wherein the heating coil (15) is at least partly arranged in the wall (11) of the container (9).

2. The sulphur evaporator of claim 1, **characterised in that** the container (9) made of ceramic material includes a bottom (10), a part of the heating coil (15) being arranged in the bottom (10).

3. The sulphur evaporator of claim 1 or 2, **characterised in that** the container (9) at its one end includes the holding space (13) for the sulphur (14) to be evaporated, the holding space (13) being designed to be open in an upward direction, and the container (9) at its other end includes a fixing means (18) being designed as a screwing base (19), a clamping base (25) and the like.

4. The sulphur evaporator of claim 3, **characterised in that** the container (9) includes a hollow space (21) being located between the holding space (13) and the fixing means (18).

5. The sulphur evaporator of claim 4, **characterised in that** the hollow space (21) is completely or partly filled with an insulating material (27).

6. The sulphur evaporator of one or more of claims 1 to 5, **characterised in that** the heat source (28) has a power density in a region between approximately 0.7 to 1.1 watt/cm², especially 1 watt/cm².

7. The sulphur evaporator of one or more of claims 1 to 6, **characterised in that** the container (9) at its lower end as seen in a working position includes a dripping edge (22), the dripping edge (22) protruding in an axial direction.

8. The sulphur evaporator of one or more of claims 1 to 7, **characterised in that** the container (9) in a direction towards its lower end as seen in a working position has a conical shape which diminishes towards the lower end.

9. The sulphur evaporator of one or more of claims 1 to 8, **characterised in that** the container (9), especially in the region of the holding space (13), includes a glazing (24).

10. The sulphur evaporator of one or more of claims 1 to 9, **characterised in that** the holding space (13) of the container (9) in the region of the bottom (10) has a flat surface (23).

## Revendications

1. Vaporisateur de soufre (3) comprenant une source de chaleur (28) sous la forme d'un filament de chauffage (15) enfoncé dans du matériau céramique et fonctionnant à l'électricité et un récipient (9) en forme de pot, présentant une paroi (11), avec un espace de logement (13) pour le soufre à vaporiser (14), le récipient (9) étant principalement à base de matériau céramique, la source de chaleur (28) sous forme du filament de chauffage (15) et le récipient (9) doté de l'espace de logement (13) pour le soufre (14) à vaporiser étant regroupés en un corps d'un seul tenant, et le filament de chauffage (15) étant disposé au moins partiellement dans la paroi (11) du récipient (9).

2. Vaporisateur de soufre selon la revendication 1, **caractérisé en ce que** le récipient (9) à base de matériau céramique présente un fond (10), dans lequel est disposée une partie du filament de chauffage (15).

3. Vaporisateur de soufre selon la revendication 1 ou 2, **caractérisé en ce que** le récipient (9) présente sur l'une de ses extrémités l'espace de logement (13) ouvert vers le haut pour le soufre (14) à vaporiser et sur son autre extrémité un moyen de fixation (18) sous la forme d'un socle à visser (19), d'un socle à serrer (25) ou similaire.

4. Vaporisateur de soufre selon la revendication 3, **caractérisé en ce que** le récipient (9) présente une cavité (21) entre l'espace de logement (13) et le moyen de fixation (18).

5. Vaporisateur de soufre selon la revendication 4, **caractérisé en ce que** la cavité (21) est remplie tout ou partiellement d'un matériau isolant (27).

6. Vaporisateur de soufre selon l'une ou plusieurs des revendications 1 à 5, **caractérisé en ce que** la source de chaleur (28) présente une densité de puissance volumique dans la plage d'environ 0,7 à 1,1 watt/cm², en particulier 1 watt/cm².

7. Vaporisateur de soufre selon l'une ou plusieurs des revendications 1 à 6, **caractérisé en ce que** le récipient (9) présente un bord à égoutter (22) dépassant axialement sur son extrémité inférieure dans la position d'utilisation.

8. Vaporisateur de soufre selon l'une ou plusieurs des revendications 1 à 7, **caractérisé en ce que** le récipient (9) présente en direction de son extrémité inférieure en position d'utilisation une forme se rétrécissant en forme de cône.

9. Vaporisateur de soufre selon l'une ou plusieurs des revendications 1 à 8, **caractérisé en ce que** le récipient (9) présente une glaçure (24) en particulier dans la zone de l'espace de logement (13).

10. Vaporisateur de soufre selon l'une ou plusieurs des revendications 1 à 9, **caractérisé en ce que** l'espace de logement (13) du récipient (9) présente une surface (23) plane dans la zone du fond (10).
